# EUROPEAN PATENT APPLICATION

(11) **EP 3 869 665 A1**
(43) Date of publication of application: **25.08.2021**
(21) Application number: 18943955.7
(22) Date of filing: 21.12.2018
(51) Int. Cl.: H02J 50/12, H02J 7/02

(54) **RECEIVING APPARATUS AND WIRELESS CHARGING METHOD**

(71) Applicant: GUANGDONG OPPO MOBILE TELECOMMUNICATIONS CORP., LTD., Dongguan, Guangdong 523860 (CN)
(72) Inventor: WAN, Shiming, Dongguan, Guangdong 523860 (CN)
(74) Representative: Manitz Finsterwald Patent- und Rechtsanwaltspartnerschaft mbB
(86) International application number: PCT/CN2018/122780
(87) International publication number: WO 2020/124582

(57) **Abstract**

A transmitting apparatus and a wireless charging method are provided. The transmitting apparatus includes a wireless transmitting circuit and a communication control circuit. The wireless transmitting circuit is configured to transmit a wireless charging signal. The communication control circuit is configured to receive a first feedback signal from a receiving apparatus and adjust, according to the first feedback signal, a voltage and/or a current corresponding to a transmission power of the wireless charging signal, where the first feedback signal is a feedback signal corresponding to an output current of a wireless receiving circuit. By means of the above technical solution, an output power of the wireless transmitting circuit can be adjusted according to the feedback signal corresponding to the output current of the wireless receiving circuit, which is possible to control the output current of the wireless receiving circuit, thereby further controlling heat generated by the wireless receiving circuit.

## Description

### TECHNICAL FIELD

This disclosure relates to the field of wireless charging, and more particularly to a receiving apparatus and a wireless charging method.

### BACKGROUND

Currently, in the field of charging, devices to-be-charged are usually charged in a wired charging manner.

Take mobile phones as an example. Currently, the mobile phone is charged mainly in a wired charging manner. When the mobile phone needs to be charged, the mobile phone can be coupled with a power supply device via a charging cable (such as a universal serial bus (USB) cable), and through the charging cable, an output power of the power supply device can be delivered to the mobile phone to charge a battery of the mobile phone.

For the device to-be-charged, the charging cable is needed for wired charging. This will result in complicated operations in a charging preparation stage. Therefore, a wireless charging manner is enjoying increasing popularity among consumers. However, a conventional wireless charging manner is low in efficiency and thus needs to be improved.

### SUMMARY

Implementations provide a receiving apparatus and a wireless charging method, which can improve charging efficiency of a wireless charging manner.

In a first aspect, a transmitting apparatus is provided. The transmitting apparatus includes a wireless transmitting circuit and a communication control circuit. The wireless transmitting circuit is configured to transmit a wireless charging signal. The communication control circuit is configured to receive a first feedback signal from a receiving apparatus and adjust, according to the first feedback signal, a voltage and/or a current corresponding to a transmission power of the wireless charging signal, where the first feedback signal is a feedback signal corresponding to an output current of a wireless receiving circuit.

In a second aspect, a wireless charging method is provided. The method includes the following. A wireless charging signal is transmitted. A first feedback signal is received from a receiving apparatus. A voltage and/or a current corresponding to a transmission power of the wireless charging signal is adjusted according to the first feedback signal, where the first feedback signal is a feedback signal corresponding to an output current of a wireless receiving circuit.

By means of the technical solutions of implementations, the transmission power of the wireless charging signal can be adjusted according to the output current of the wireless receiving circuit, which can control the output current of the wireless receiving circuit, thereby controlling heat generated by the wireless receiving circuit.

### BRIEF DESCRIPTION OF THE DRAWINGS

FIG. 1 is a schematic diagram of a wireless charging system.
FIG. 2 is a schematic structural diagram of a wireless charging system according to implementations.
FIG. 3 is a schematic structural diagram of a wireless charging system according to other implementations.
FIG. 4 is a schematic structural diagram of a wireless charging system according to other implementations.
FIG. 5 is a schematic structural diagram of a wireless charging system according to other implementations.
FIG. 6 is a schematic structural diagram of a device to-be-charged according to implementations.
FIG. 7 is a schematic flowchart of a wireless charging method according to implementations.

### DETAILED DESCRIPTION

According to conventional wireless charging technology, a power supply device (such as an adaptor) is generally coupled with a wireless charging apparatus (such as a wireless charging base), and via the wireless charging apparatus, an output power of the power supply device is delivered to a device to-be-charged wirelessly (for example, via an electromagnetic wave) for wireless charging of the device to-be-charged.

According to various wireless charging principles, wireless charging can be in the manner of magnetic coupling (or electromagnetic induction), magnetic resonance, and radio waves. At present, main wireless charging standard includes QI standard, power matters alliance (PMA) standard, and alliance for wireless power (A4WP) standard. Under the QI standard and the PMA standard, magnetic coupling is adopted for wireless charging, and under the A4WP standard, magnetic resonance is adopted for wireless charging.

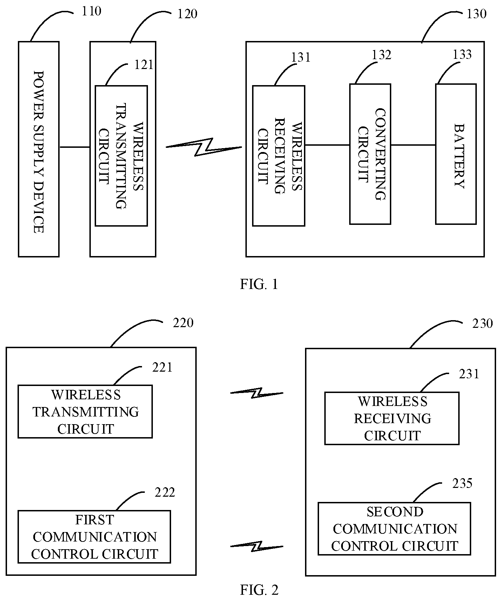

In the following, a wireless charging manner of implementations will be described in connection with FIG. 1.

As illustrated in FIG. 1, a wireless charging system includes a power supply device 110, a wireless charging apparatus 120, and a device to-be-charged 130. The wireless charging apparatus 120 can be, for example, a wireless charging base. The device to-be-charged 130 can be, for example, a terminal.

After the power supply device 110 is coupled with the wireless charging apparatus 120, an output voltage and an output current of the power supply device 110 can be transmitted to the wireless charging apparatus 120.

The wireless charging apparatus 120 can convert, via an internal wireless transmitting circuit 121, the output voltage and the output current of the power supply device 110 into a wireless charging signal (that is, an electromagnetic signal) for transmission. For example, the wireless transmitting circuit 121 can convert the output current of the power supply device 110 into an alternating current (AC) to be converted, via a transmitting coil or transmitting antenna, into a wireless charging signal.

FIG. 1 is merely an exemplary structural diagram of a wireless charging system, but implementations are not limited thereto. For example, the wireless charging apparatus 120 may also be a wireless-charging-signal transmitting apparatus, and the device to-be-charged 130 may also be a wireless-charging-signal receiving apparatus. The wireless-charging-signal receiving apparatus may be, for example, a chip with a wireless-charging-signal reception function which is capable of receiving a wireless charging signal transmitted by the wireless charging apparatus 120, or may be a device to-be-charged.

The "device to-be-charged" can include but is not limited to a device configured via a wired line and/or a wireless interface to receive/transmit communication signals. Examples of the wired line may include, but are not limited to, a public switched telephone network (PSTN), a digital subscriber line (DSL), a digital cable, a direct connection cable, and/or another data connection/network. Examples of the wireless interface may include, but are not limited to, a wireless interface with a cellular network, a wireless local area network (WLAN), a digital television network (such as a digital video broadcasting-handheld (DVB-H) network), a satellite network, an amplitude modulation-frequency modulation (AM-FM) broadcast transmitter, and/or with another communication terminal. A terminal configured to communicate via a wireless interface may be called a "wireless communication terminal", a "wireless terminal", and/or a "mobile terminal". Examples of a mobile terminal may include, but are not limited to, a satellite or cellular telephone, a personal communication system (PCS) terminal capable of cellular radio telephone, data processing, fax, and/or data communication, a personal digital assistant (PDA) equipped with radio telephone, pager, Internet/Intranet access, web browsing, notebook, calendar, and/or global positioning system (GPS) receiver, and/or other electronic devices equipped with radio telephone receiver such as a conventional laptop or a handheld receiver. The device to-be-charged of implementations may refer to a mobile terminal device or a handheld terminal device, such as mobile phone, pad, or the like. The device to-be-charged may also refer to a system-on-chip (SOC). A battery of the device to-be-charged may or may not belong to the SOC.

The following will take the wireless charging apparatus and the device to-be-charged as an example for description.

The device to-be-charged 130 can receive, via a wireless receiving circuit 131, the wireless charging signal transmitted by the wireless transmitting circuit 121, and convert the wireless charging signal into an output voltage and an output current of the wireless receiving circuit 131. For example, the wireless receiving circuit 131 can convert, through a receiving coil or receiving antenna, the wireless charging signal transmitted by the wireless transmitting circuit 121 into an AC, and rectify and/or filter the AC to convert the AC into the output voltage and the output current of the wireless receiving circuit 131.

In some examples, before wireless charging, the wireless charging apparatus 120 will negotiate in advance with the device to-be-charged 130 a transmission power of the wireless transmitting circuit 121. If the power negotiated between the wireless charging apparatus 120 and the device to-be-charged 130 is 5W (watt), the output voltage and the output current of the wireless receiving circuit 131 is generally 5V (volt) and 1A (ampere) respectively. If the power negotiated between the wireless charging apparatus 120 and the device to-be-charged 130 is 10.8W, the output voltage and the output current of the wireless receiving circuit 131 is generally 9V and 1.2A respectively.

If the output voltage of the wireless receiving circuit 131 is not suitable for being directly applied to a battery 133, the output voltage of the wireless receiving circuit 131 needs to be subjected to constant-voltage control and/or constant-current control performed by a converting circuit 132 of the device to-be-charged 130, to obtain a charging voltage and/or a charging current expected by the battery 133 of the device to-be-charged 130.

The converting circuit 132 is configured to convert the output voltage of the wireless receiving circuit 131, such that an output voltage and/or an output current of the converting circuit 132 meets requirements on charging voltage and/or charging current of the battery 133.

As an example, the converting circuit 132 may be, for example, a charging integrated circuit (IC) or a power management circuit. The converting circuit 132 is configured to manage a charging voltage and/or a charging current applied to the battery 133 during charging of the battery 133. The converting circuit 132 has a voltage feedback function and/or a current feedback function to implement management of the charging voltage and/or the charging current applied to the battery 133 respectively.

For example, charging of the battery can include one or more of a trickle charging stage, a constant-current charging stage, and a constant-voltage charging stage. In the trickle charging stage, the converting circuit 132 can utilize a current feedback function such that a current flowing into the battery 133 in the trickle charging stage meets requirements on charging current (such as a first charging current) of the battery 133. In the constant-current charging stage, the converting circuit 132 can utilize a current feedback function such that a current flowing into the battery 133 in the constant-current charging stage meets requirements on charging current (such as a second charging current, which can be larger than the first charging current) of the battery 133. In the constant-voltage charging stage, the converting circuit 132 can utilize a voltage feedback function such that a voltage applied to the battery 133 in the constant-voltage charging stage meets requirements on charging voltage of the battery 133.

As an example, if the output voltage of the wireless receiving circuit 131 is higher than the charging voltage expected by the battery 133, the converting circuit 132 performs buck conversion on the output voltage of the wireless receiving circuit 131, such that a charging voltage subjected to buck conversion (that is, bucked voltage) meets requirements on charging voltage of the battery 133. As another example, if the output voltage of the wireless receiving circuit 131 is lower than the charging voltage expected by the battery 133, the converting circuit 132 performs boost conversion on the output voltage of the wireless receiving circuit 131, such that a charging voltage subjected to boost conversion (that is, boosted voltage) meets requirements on charging voltage of the battery 133.

As an example, the output voltage of the wireless receiving circuit 131 can be a constant 5V. When the battery 133 includes a single cell, the converting circuit 132 (such as a buck circuit) performs buck conversion on the output voltage of the wireless receiving circuit 131, such that the charging voltage subjected to buck conversion meets requirements on charging voltage of the battery 133.

As another example, the output voltage of the wireless receiving circuit 131 can be a constant 5V. When the battery 133 includes two or more cells coupled in series, the converting circuit 132 (such as a boost circuit) performs boost conversion on the output voltage of the wireless receiving circuit 131, such that the charging voltage subjected to boost conversion meets requirements on charging voltage of the battery 133.

Due to limitations of the converting circuit 132 in terms of low power-conversion efficiency (also referred to as energy-conversion efficiency or circuit conversion efficiency), unconverted electrical energy may dissipate as heat, and such heat will accumulate inside the device to-be-charged 130. In addition, design space and heat dissipation space of the device to-be-charged 130 are both very small (for example, mobile terminals are becoming lighter and thinner in physical size, and at the same time, a large number of electronic components are densely arranged inside the mobile terminal to improve performance of the mobile terminal), which not only makes design of the converting circuit 132 more difficult, but also makes it difficult to promptly remove heat accumulated inside the device to-be-charged 130, which can cause the device to-be-charged 130 to malfunction.

For example, heat accumulated in the converting circuit 132 may cause heat interference on electronic components near the converting circuit 132, which can result in malfunction of the electronic components. For another example, heat accumulated in the converting circuit 132 may shorten the service life of the converting circuit 132 and the service life of the electronic components near the converting circuit 132. For another example, heat accumulated in the converting circuit 132 may cause heat interference on the battery 133, which leads to abnormal charging and discharging of the battery 133. For another example, heat accumulated in the converting circuit 132 may result in rise in temperature of the device to-be-charged 130 and therefore affects user experience when the device to-be-charged is in use during charging. For another example, heat accumulated in the converting circuit 132 may cause the converting circuit 132 to short circuit, and as a result, the output voltage of the wireless receiving circuit 131 will be directly applied to the battery 133, thus causing a charging abnormality. If the battery 133 is overcharged for a long time, it may even cause the battery 133 to explode, endangering the user's safety.

In general, a high voltage difference between an input voltage of the converting circuit 132 and an output voltage of the converting circuit 132 (hereinafter, "voltage difference of the converting circuit 132" for short) leads to a low buck-conversion efficiency and serious heating. Adoption of high-voltage based wireless signal transmission will result in a high voltage difference of the converting circuit 132. Therefore, in order to reduce the voltage difference of the converting circuit, an increasing number of batteries of devices to-be-charged are charged with low voltage and large current. However, a large charging current will lead to serious heat accumulation in the wireless receiving circuit 131.

Taking a charging power of 20W as an example, in order to reduce heating of the converting circuit 132, the wireless charging apparatus 120 can output a charging power in the manner of low voltage and large current, for example, a charging power of 5V/4A. Accordingly, the wireless receiving circuit 131 can convert the wireless charging signal into an output voltage/output current of 5V/4A. However, a large current will cause a large amount of heat to be generated by a transmitting coil of the wireless transmitting circuit 121 and a receiving coil of the wireless receiving circuit 131 during electrical energy transmission, and heating during charging will adversely affect charging speed and service life of a product and decrease reliability of a product.

Therefore, how to reduce heating during wireless charging has become a problem to be solved.

In some related art, in order to reduce heating of a coil during wireless charging, a low charging power is adopted. For example, the wireless charging apparatus 120 outputs only a charging power of at most 7.5W to charge the device to-be-charged 130. In such a charging manner, charging speed will be low, and it will take a long time to fully charge the device to-be-charged 130.

In other related art, instead of adopting a low charging power, in order to increase charging speed, the wireless charging apparatus 120 increases the charging power (for example, the charging power is increased from 7.5W to 10W) for wireless charging. However, such a charging manner fails to shorten a charging duration to an expected charging duration (for example, shorter than 100 minutes). As described above, when a high charging power is adopted for wireless charging, it will result in heating of a coil or heating of the converting circuit 132. In a system in which magnetic coupling is adopted for wireless charging, a distance between the wireless charging apparatus 120 and the device to-be-charged 130 is usually very short. As a result, heat generated by a coil of the wireless charging apparatus 120 will be transferred to the device to-be-charged 130. For the device to-be-charged 130, heat generated by a coil and the converting circuit of the device to-be-charged 130 will be transferred to the battery to some extent. In addition, due to heating of the battery itself during charging, a temperature of the battery will easily exceed a safe charging range. When heating of the coil, heating of the converting circuit, and heating of the battery exceed the safe charging range, it is necessary to return to a low charging power (such as 7.5W) or stop charging, to ensure safe charging. Therefore, in the above related art, although a maximum charging power in wireless charging is increased, the maximum charging power is adopted only for a short time, and since a high charging power is adopted for wireless charging only for a short time, it is impossible to shorten a charging duration to the expected charging duration.

In addition, in other related art, in order to reduce heating, heat dissipation technologies, such as graphene, a heat dissipation plate, or the like, are adopted during charging. However, these heat dissipation technologies are low in efficiency, and on the other hand, will increase product cost, occupy an internal space of a product, and affect product appearance.

In order to solve the above problems, implementations provide a wireless charging system. The wireless charging system includes a wireless-charging-signal transmitting apparatus (such as the wireless charging apparatus described above) and a wireless-charging-signal receiving apparatus (such as the device to-be-charged described above). The wireless-charging-signal transmitting apparatus can perform wireless communication with the wireless-charging-signal receiving apparatus, and a transmission power of the wireless-charging-signal transmitting apparatus can be adjusted according to feedback information sent by the wireless-charging-signal receiving apparatus, such that the transmission power of the wireless-charging-signal transmitting apparatus matches a charging voltage and/or a charging current currently required by the battery. Therefore, wireless charging power can be increased according to charging requirements of the wireless-charging-signal receiving apparatus, thereby increasing charging speed.

On the other hand, in order to avoid that the output current of the wireless receiving circuit is too large, the wireless-charging-signal receiving apparatus can feed back information on the output current of the wireless receiving circuit. As such, the wireless-charging-signal transmitting apparatus can adjust the transmission power thereof according to feedback information of the output current of the wireless receiving circuit, such that the output current of the wireless receiving circuit satisfies a preset condition.

By controlling the output current of the wireless receiving circuit through the wireless-charging-signal transmitting apparatus, it is possible to control heating of the wireless transmitting circuit (including the transmitting coil) and the wireless receiving circuit (including the receiving coil), thereby reducing heating during charging. Therefore, compared with the related art, it is possible to prolong a duration of high-power wireless charging, thereby increasing charging speed and shortening charging time. The following will describe a wireless charging system of implementations with reference to FIG. 2, which is possible to control heating during charging by controlling the output current of the wireless receiving circuit.

As illustrated in FIG. 2, a wireless charging system includes a wireless-charging-signal transmitting apparatus 220 and a wireless-charging-signal receiving apparatus 230. The wireless-charging-signal transmitting apparatus 220 includes a wireless transmitting circuit 221 and a first communication control circuit 222. A control function of the first communication control circuit 222 can be implemented by, for example, a micro control unit (MCU). The wireless-charging-signal receiving apparatus 230 includes a wireless receiving circuit 231 and a second communication control circuit 235. The wireless receiving circuit 231 is configured to receive a wireless charging signal transmitted by the wireless transmitting circuit 221 to charge a battery. The second communication control circuit 235 is configured to communicate with the first communication control circuit 222, such that the first communication control circuit 222 can adjust an output power of the wireless charging signal.

It can be understood that, the wireless-charging-signal transmitting apparatus may be abbreviated as a transmitting apparatus, and the wireless-charging-signal receiving apparatus may be abbreviated as a receiving apparatus.

The wireless transmitting circuit 221 is configured to transmit the wireless charging signal to charge a device to-be-charged. The wireless transmitting circuit 221 may include a wireless transmission driving circuit and a transmitting coil or transmitting antenna. The wireless transmission driving circuit may be configured to generate a high-frequency AC, and the transmitting coil or transmitting antenna may be configured to convert the high-frequency AC into an electromagnetic signal for transmission.

The first communication control circuit 222 has a communication function and may be configured to perform wireless communication with the wireless-charging-signal receiving apparatus 230 during wireless charging. The first communication control circuit 222 can communicate with the second communication control circuit 235. The wireless-charging-signal receiving apparatus 230 may be a device to-be-charged, or may be a chip with a wireless-charging-signal reception function. There is no limitation on the manner of communication between the first communication control circuit 222 and the wireless-charging-signal receiving apparatus 230 and the content communicated between the first communication control circuit 222 and the wireless-charging-signal receiving apparatus 230 in implementations, which will be described in detail below in connection with various implementations.

The second communication control circuit 235 can communicate with the first communication control circuit 222 according to an output current of the wireless receiving circuit 231 and send a first feedback signal to the first communication control circuit 222. The wireless-charging-signal receiving apparatus may further include a detecting circuit. The detecting circuit may be configured to detect the output current of the wireless receiving circuit.

The first communication control circuit 222 may further have a power adjustment function and be capable of adjusting a transmission power of the wireless charging signal. The first communication control circuit 222 is configured to receive the first feedback signal from the wireless-charging-signal receiving apparatus 230, and adjust the transmission power of the wireless charging signal according to the first feedback signal. The first feedback signal is a feedback signal corresponding to the output current of the wireless receiving circuit.

"The first communication control circuit 222 adjusts the transmission power of the wireless charging signal according to the first feedback signal" may refer to that the first communication control circuit 222 adjusts a voltage and/or a current corresponding to the transmission power of the wireless charging signal according to the first feedback signal. "The voltage and/or the current corresponding to the transmission power of the wireless charging signal" may be comprehended as an output voltage and/or an output current obtained through conversion of the wireless charging signal transmitted by the wireless transmitting circuit, which is performed by the wireless receiving circuit after the wireless receiving circuit receives the wireless charging signal.

"Adjust the transmission power of the wireless charging signal" may be comprehended as adjusting a relationship between the voltage and the current corresponding to the transmission power of the wireless charging signal while the transmission power of the wireless charging signal remains constant. For example, when the transmission power remains unchanged, the current can be decreased by increasing the voltage.

The wireless charging signal transmitted by the wireless transmitting circuit 221 can be received by the wireless receiving circuit 231. The wireless receiving circuit 231 can convert the received wireless charging signal into an output voltage and the output current of the wireless receiving circuit 231.

As pointed above, an output current of the wireless transmitting circuit 221 and the output current of the wireless receiving circuit 231 are key factors in affecting heating during wireless charging. According to implementations herein, the first communication control circuit 222 can adjust the transmission power of the wireless charging signal according to the received feedback signal corresponding to the output current of the wireless receiving circuit, such that the output current of the wireless receiving circuit satisfies a preset condition. Therefore, compared with the related art, it is possible to control heat generation of a receiving coil of the wireless receiving circuit, thereby reducing heating during charging.

There is no restriction on the manner of communication between the first communication control circuit 222 of the wireless-charging-signal transmitting apparatus 220 and the second communication control circuit 235 of the wireless-charging-signal receiving apparatus 230 in implementations. The first communication control circuit 222 may communicate with the second communication control circuit 235 in a wireless communication manner such as Bluetooth®, wireless fidelity (Wi-Fi), backscatter modulation (or power load modulation) communication, high-carrier-frequency based short-distance wireless communication, optical communication, ultrasonic communication, ultra-wideband communication, or mobile communication.

The high-carrier-frequency based short-distance wireless communication may include an IC chip with an extremely high frequency (EHF) antenna packaged therein. As an example, a high carrier frequency may be 60GHz (gigahertz).

The optical communication may be performed by an optical communication module. The optical communication module may include an infrared communication module, and the infrared communication module may transmit information with infrared rays.

The mobile communication may be performed by a mobile communication module. The mobile communication module may use mobile communication protocols such as 5^{th} generation (5G) communication protocols, 4^{th} generation (4G) communication protocols, or 3^{rd} generation (3G) communication protocols for information transmission.

Compared with coupling, through signal modulation, to a coil of the wireless receiving circuit for communication in the Qi standard, by means of the above wireless communication manner, it is possible to improve reliability of communication and on the other hand, avoid voltage ripples caused by communication through signal coupling which will affect voltage processing of a buck circuit.

The first communication control circuit 222 may also communicate with the second communication control circuit 235 through wired communication via a data interface.

As pointed above, during wireless charging, the second communication control circuit can communicate with the first communication control circuit 222 according to the detected output current of the wireless receiving circuit, such that the first communication control circuit 222 can adjust the transmission power of the wireless charging signal. However, the content communicated between the second communication control circuit 235 and the first communication control circuit 222 is not limited in implementations. In other words, the content of the first feedback signal is not limited in implementations.

As an example, the first feedback signal may include a value of the output current of the wireless receiving circuit 231 and/or a difference between the output current of the wireless receiving circuit 231 and a threshold value. The threshold value may be a maximum threshold value, that is, a preset maximum value of the output current of the wireless receiving circuit 231. When the output current of the wireless receiving circuit 231 exceeds the threshold value, it indicates serious heating of the wireless receiving circuit 231.

Upon receiving the value of the output current of the wireless receiving circuit 231, the first communication control circuit 222 can adjust the transmission power of the wireless charging signal according to the value of the output current of the wireless receiving circuit 231.

For example, when the first feedback signal indicates that the output current of the wireless receiving circuit 231 is larger than 2A, the first communication control circuit 222 can increase an output voltage of the wireless transmitting circuit 221, to decrease the output current of the wireless receiving circuit 231.

Upon receiving the difference between the output current of the wireless receiving circuit 231 and the threshold value, the first communication control circuit 222 can adjust the transmission power of the wireless charging signal according to the difference.

For example, when the first feedback signal indicates that the output current of the wireless receiving circuit 231 is larger than the threshold value, the first communication control circuit 222 can increase the output voltage of the wireless transmitting circuit. If the first feedback signal indicates that the output current of the wireless receiving circuit 231 is smaller than the threshold value, the first communication control circuit 222 does not have to adjust an output power of the wireless transmitting circuit.

For another example, the first feedback signal is indicative of the difference between the output current of the wireless receiving circuit 231 and the threshold value. When the difference is large, the first communication control circuit 222 can adjust the transmission power of the wireless charging signal significantly. When the difference is small, the first communication control circuit 222 can adjust the transmission power of the wireless charging signal slightly.

As an example, the wireless-charging-signal transmitting apparatus 220 may set multiple grades for a transmission power of the wireless transmitting circuit. When the difference between the output current of the wireless receiving circuit 231 and the threshold value is large, the first communication control circuit 222 may adjust the transmission power of the wireless transmitting circuit 221 by multiple grades. A power value corresponding to each grade may be set to be a fixed value, such as 10mW (milliwatt), 20mW, etc. When the difference between the output current of the wireless receiving circuit 231 and the threshold value is small, the first communication control circuit 222 may adjust the transmission power of the wireless transmitting circuit by one grade.

For instance, when the first feedback signal indicates that the output current of the wireless receiving circuit 231 is larger than the threshold value by 1A, the first communication control circuit 222 can increase the output voltage of the wireless transmitting circuit 221 by a high magnitude, for example, adjust the transmission power of the wireless transmitting circuit 221 by two grades. When the first feedback signal indicates that the output current of the wireless receiving circuit 231 is higher than the threshold value by 0.5A, the first communication control circuit 222 can increase the output voltage of the wireless transmitting circuit 221 by a low magnitude, for example, adjust the transmission power of the wireless transmitting circuit 221 by one grade.

For another instance, the first feedback signal may include adjustment information, to instruct to increase or decrease the transmission power of the wireless transmitting circuit. For example, the first feedback signal may instruct the first communication control circuit 222 to increase the transmission power of the wireless transmitting circuit 221. For another example, the first feedback signal may instruct the first communication control circuit 222 to decrease the transmission power of the wireless transmitting circuit 221. The wireless-charging-signal transmitting apparatus 220 can set multiple grades for the transmission power of the wireless transmitting circuit 221. Each time the first communication control circuit 222 receives the adjustment information, the first communication control circuit 222 adjusts the transmission power of the wireless transmitting circuit 221 by one grade, until the output current of the wireless receiving circuit 231 satisfies the preset condition.

By instructing, through the adjustment information, to increase or decrease the transmission power of the wireless transmitting circuit, the first communication control circuit 222 can adjust the transmission power of the wireless transmitting circuit to be a required power through one time of feedback only, without multiple times of feedback and confirmation, thereby saving time for loop response.

According to technical solutions provided herein, the wireless-charging-signal receiving apparatus (such as the device to-be-charged) can detect the output current of the wireless receiving circuit. When the output current of the wireless receiving circuit is beyond a preset range, the device to-be-charged can notify the wireless-charging-signal transmitting apparatus (such as the wireless charging base), to instruct the wireless charging base to adjust the transmission power of the wireless transmitting circuit, such that the output current of the wireless receiving circuit meets requirements and heating of the wireless receiving circuit can be controlled. Therefore, compared with the related art, it is possible to prolong a duration of high-power (such as 15W) wireless charging, thereby increasing charging speed and shortening charging time.

It can be understood that, the first feedback signal may also include any combination of various information described above. For example, the first feedback signal may include the value of the output current of the wireless receiving circuit 231, and the difference between the output current of the wireless receiving circuit 231 and the threshold value. For another example, the first feedback signal may include the difference between the output current of the wireless receiving circuit 231 and the threshold value, and the adjustment information used for instructing to increase or decrease the transmission power of the wireless transmitting circuit 221.

It can be understood that, when the transmission power of the wireless transmitting circuit 221 remains constant, the output voltage of the wireless receiving circuit 231 is inversely proportional to the output current of the wireless receiving circuit 231. Therefore, the first feedback signal described above may also include information of the output voltage of the wireless receiving circuit 231.

There is no limitation on the manner in which the first communication control circuit 222 adjusts the transmission power of the wireless charging signal in implementations.

As an example, the first communication control circuit 222 can adjust the transmission power of the wireless charging signal by adjusting a transmission frequency of the wireless charging signal. When the output current of the wireless receiving circuit 231 is higher than the threshold value, the first communication control circuit 222 can increase the transmission frequency of the wireless charging signal to increase the output voltage of the wireless receiving circuit 231, thereby decreasing the output current of the wireless receiving circuit.

It can be understood that, when an input voltage of the wireless transmitting circuit 221 remains constant, by increasing the transmission frequency of the wireless charging signal, the output voltage of the wireless receiving circuit 231 can be increased to some extent, thereby decreasing the output current of the wireless receiving circuit 231.

As another example, the first communication control circuit 222 can adjust the transmission power of the wireless charging signal by adjusting the input voltage and/or an input current of the wireless transmitting circuit 221. When the output current of the wireless receiving circuit 231 is higher than the threshold value, the first communication control circuit 222 can increase the input voltage of the wireless transmitting circuit 221 to increase the output voltage of the wireless receiving circuit 231, thereby decreasing the output current of the wireless receiving circuit.

It can be understood that, when the transmission power of the wireless transmitting circuit 221 remains constant, the output voltage of the wireless receiving circuit 231 is inversely proportional to the output current of the wireless receiving circuit 231. When the output voltage of the wireless receiving circuit 231 increases, the output current of the wireless receiving circuit 231 decreases.

In some implementations, the wireless-charging-signal transmitting apparatus 220 may further include a voltage converter. The voltage converter has an input end electrically coupled with an output end of a power supply device and an output end electrically coupled with an input end of the wireless transmitting circuit. The voltage converter is configured to adjust an output voltage and/or an output current of the power supply device, to obtain an output voltage of the voltage converter. In other words, the voltage converter can perform boost conversion or buck conversion on the output voltage of the power supply device, to obtain the output voltage of the voltage converter.

"Adjust the transmission power of the wireless charging signal by adjusting the input voltage and/or the input current of the wireless transmitting circuit" may refer to adjusting the transmission power of the wireless charging signal by adjusting the output voltage of the voltage converter.

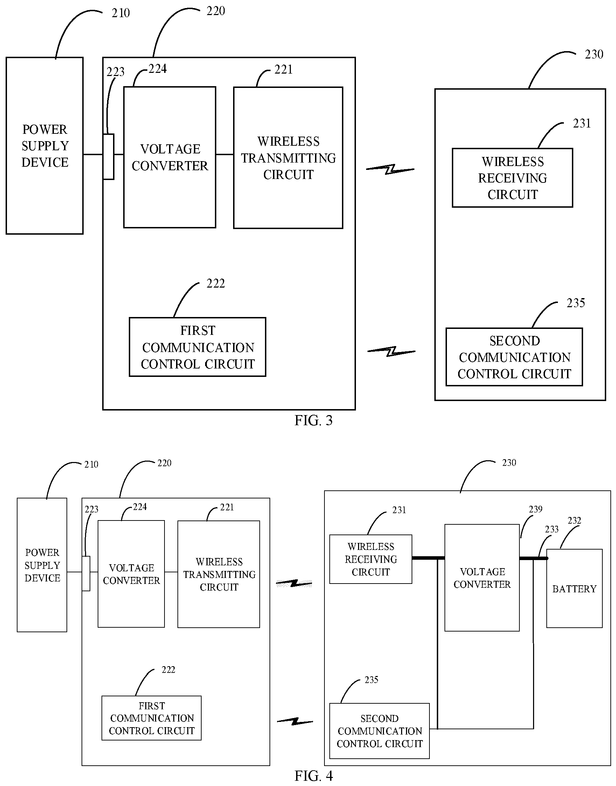

FIG. 3 illustrates an exemplary manner of adjusting the transmission power of the wireless transmitting circuit. As illustrated in FIG. 3, the wireless-charging-signal transmitting apparatus 220 further includes a charging interface 223. The charging interface 223 is configured to be coupled with an external power supply device 210. The wireless transmitting circuit 221 is further configured to generate the wireless charging signal according to an output voltage and an output current of the power supply device 210.

The first communication control circuit 222 is further configured to adjust, during wireless charging, an amount of power extracted by the wireless transmitting circuit 221 from an output power of the power supply device 210, to adjust the transmission power of the wireless transmitting circuit 221. For example, the power supply device 210 may directly output a high constant power (such as 40W). In this way, the first communication control circuit 222 can directly adjust an amount of power extracted by the wireless transmitting circuit 221 from the constant output power provided by the power supply device 210.

According to implementations provided herein, the output power of the power supply device 210 may be constant. For example, the power supply device 210 may directly output a high constant power (such as 40W). The power supply device 210 can provide an output voltage and an output current to the wireless charging apparatus 220 according to the constant output power. During charging, the first communication control circuit 222 can extract, from the constant output power provided by the power supply device, a certain amount of power for wireless charging according to actual needs. In other words, responsibility for adjusting the transmission power of the wireless transmitting circuit 221 is assigned to the first communication control circuit 222. Upon receiving a feedback signal from the second communication control circuit 235, the first communication control circuit 222 can immediately adjust the transmission power of the wireless transmitting circuit 221, which is quick in adjustment and high in efficiency.

The manner in which the first communication control circuit 222 extracts power from a maximum output power provided by the power supply device 210 is not limited in implementations. For example, a voltage converter 224 can be disposed inside the wireless-charging-signal transmitting apparatus 220. The voltage converter 224 can be coupled with the transmitting coil or transmitting antenna to adjust power received by the transmitting coil or the transmitting antenna. The voltage converter 224 can include, for example, a pulse width modulation (PWM) controller and a switch component. The first communication control circuit 222 can adjust the transmission power of the wireless transmitting circuit 221 by adjusting a duty cycle of a control signal transmitted by the PWM controller and/or by controlling switch frequency of the switch component.

Functions of the voltage converter 224 may also be implemented by the first communication control circuit 222.

The type of the power supply device 210 is not limited in implementations. For example, the power supply device 210 can be an adaptor, a power bank, a vehicle charger, a computer, or the like.

The type of the charging interface 223 is not limited in implementations. The charging interface 223 may be a USB interface. The USB interface can be, for example, a USB 2.0 interface, a micro USB interface, or a USB TYPE-C interface. Alternatively, the charging interface 223 can also be a lightning interface, or other types of parallel interface and/or serial interface that is used for charging.

The manner of communication between the first communication control circuit 222 and the power supply device 210 is not limited in implementations. As an example, the first communication control circuit 222 can be coupled with and communicate with the power supply device 210 via another communication interface other than the charging interface. As another example, the first communication control circuit 222 can communicate with the power supply device 210 in a wireless manner. For example, the first communication control circuit 222 can perform near field communication (NFC) with the power supply device 210. As another example, the first communication control circuit 222 can communicate with the power supply device 210 via the charging interface 223 without providing an extra communication interface or another wireless communication module, which can simplify implementation of the wireless charging apparatus (that is, the wireless-charging-signal transmitting apparatus) 220. For instance, the charging interface 223 is a USB interface. The first communication control circuit 222 can communicate with the power supply device 210 via a data line (such as a D+ line and/or a D- line) of the USB interface. For another instance, the charging interface 223 is a USB interface supporting a power delivery (PD) communication protocol (such as the USB TYPE-C interface). The first communication control circuit 222 can communicate with the power supply device 210 based on the PD communication protocol.

The manner in which the first communication control circuit 222 adjusts the transmission power of the wireless charging signal is not limited herein. For example, the first communication control circuit 222 can adjust the transmission power of the wireless charging signal by adjusting the transmission frequency of the wireless charging signal. For another example, the first communication control circuit 222 can adjust the transmission power of the wireless charging signal by adjusting the input voltage and/or the input current of the wireless transmitting circuit 221. For another example, the first communication control circuit 222 can adjust the transmission power of the wireless charging signal by adjusting both the transmission frequency of the wireless charging signal and the input voltage and/or the input current of the wireless transmitting circuit 221.

For example, when the difference between the output current of the wireless receiving circuit 231 and the threshold value is small, the first communication control circuit 222 can adjust the transmission power of the wireless charging signal by adjusting the transmission frequency of the wireless charging signal. For another example, when the difference between the output current of the wireless receiving circuit 231 and the threshold value is large, the first communication control circuit 222 can first perform a rough adjustment on the transmission power of the wireless charging signal by adjusting the input voltage of the wireless transmitting circuit 221, and then perform a fine adjustment on the transmission power of the wireless charging signal by adjusting the transmission frequency of the wireless charging signal. For another example, the first communication control circuit 222 can first adjust the transmission power of the wireless charging signal by adjusting the transmission frequency of the wireless charging signal, and if the transmission power of the wireless charging signal obtained after adjustment of the transmission frequency still fails to meet requirements on output current of the wireless receiving circuit 231, the first communication control circuit 222 can then adjust the transmission power of the wireless charging signal by adjusting the input voltage and/or the input current of the wireless transmitting circuit 221.

As illustrated in FIG. 4, the wireless-charging-signal receiving apparatus 230 further includes a first charging channel 233. Through the first charging channel 233, the output voltage and/or the output current of the wireless receiving circuit 231 can be applied to a battery 232 for charging.

The first charging channel 233 may be provided with a voltage converter 239. The voltage converter 239 has an input end electrically coupled with an output end of the wireless receiving circuit 231. The voltage converter 239 is configured to perform buck conversion on the output voltage of the wireless receiving circuit 231 to charge the battery 232.

The voltage converter 239 can be a buck circuit, a boost circuit, a charge pump, or a charging management circuit.

The charge pump is composed of multiple switch components. Heat produced by current flowing through the multiple switch components is small, which is nearly equal to heat produced by current flowing directly through a wire. Therefore, by adopting the charge pump as the voltage converter 239, it is possible to not only decrease voltage but also reduce heating. Alternatively, the voltage converter 239 may be a half-voltage circuit.

The voltage converter 239 may be configured to decrease the output voltage of the wireless receiving circuit 231 and/or adjust the output current of the wireless receiving circuit 231, such that an output voltage and/or an output current of the voltage converter 239 matches respectively a charging voltage and/or a charging current currently required by the battery.

As described above, conversion efficiency of the voltage converter 239 is limited by a voltage difference between the input end and the output end of the voltage converter 239 (that is, voltage difference of the voltage converter 239). If the voltage difference of the voltage converter 239 is too large, the conversion efficiency of the voltage converter 239 will be low, which will cause unconverted electrical energy to dissipate as heat and as a result, lead to serious heating of the voltage converter 239.

Therefore, a voltage at the input end of the voltage converter 239 (that is, an input voltage of the voltage converter 239) should not be too high. In other words, the output voltage of the wireless receiving circuit 231 should not be too high, and the output current of the wireless receiving circuit 231 should not be too small.

Therefore, a minimum threshold value of the output current of the wireless receiving circuit 231 can be set. Under the same charging power, a small output current of the wireless receiving circuit 231 corresponds to a high output voltage of the wireless receiving circuit 231. A high output voltage of the wireless receiving circuit 231 will lead to a large voltage difference between the input end and the output end of the voltage converter 239. A large voltage difference of the voltage converter 239 will lead to a low buck-conversion efficiency of the voltage converter 239 and serious heating. By setting the minimum threshold value of the output current of the wireless receiving circuit 231, it is possible to improve conversion efficiency of the voltage converter 239, thereby further controlling heating during wireless charging.

By setting the maximum threshold value and the minimum threshold value of the output current of the wireless receiving circuit 231, in addition to controlling heating of the wireless transmitting circuit 221 and the wireless receiving circuit 231, it is possible to control a voltage difference between the output voltage of the wireless receiving circuit 231 and a charging voltage applied to the battery, thereby improving charging efficiency.

The second communication control circuit 235 can send the first feedback signal to the first communication control circuit 222, to instruct the first communication control circuit 222 to adjust the transmission power of the wireless charging signal, such that the output current of the wireless receiving circuit 231 is within a preset range. The preset range may be a range between the maximum threshold value and the minimum threshold value of the output current of the wireless receiving circuit 231.

When the output current of the wireless receiving circuit 231 is less than the minimum threshold value, the first communication control circuit 222 can decrease the output voltage of the wireless receiving circuit 231 to increase the output current of the wireless receiving circuit 231. As an example, the first communication control circuit 222 can decrease the transmission frequency of the wireless charging signal to decrease the output voltage of the wireless receiving circuit 231. As another example, the first communication control circuit 222 can decrease the input voltage of the wireless transmitting circuit 221 to decrease the output voltage of the wireless receiving circuit 231. As another example, the first communication control circuit 222 can decrease both the transmission frequency of the wireless charging signal and the input voltage of the wireless transmitting circuit 221 to decrease the output voltage of the wireless receiving circuit. For details of the manner of adjustment, reference can be made to the foregoing descriptions, which will not be repeated herein for the sake of simplicity.

"Decrease the input voltage of the wireless transmitting circuit 221" may also refer to decreasing an output voltage of the voltage converter 224.

It can be understood that, the purpose of setting a minimum value of the output current of the wireless receiving circuit 231 is to ensure that the voltage difference of the voltage converter 239 will not be excessively high to adversely affect voltage-conversion efficiency. Therefore, a first maximum threshold value of the voltage difference of the voltage converter 239 may also be set. The first communication control circuit 222 can adjust the transmission power of the wireless charging signal according to the voltage difference between the input end and the output end of the voltage converter 239.

The first feedback signal may include voltage-difference information. The voltage-difference information may be a value of the voltage difference between the input end and the output end of the voltage converter 239, or may be a difference between the voltage difference of the voltage converter 239 and the first maximum threshold value. The wireless-charging-signal receiving apparatus 230 can obtain the voltage-difference information, and send the first feedback signal to the first communication control circuit 222 according to the voltage-difference information. Upon receiving the first feedback signal, the first communication control circuit 222 can adjust the transmission power of the wireless charging signal according to the voltage-difference information.

For example, when the first feedback signal indicates that the voltage difference is greater than the first maximum threshold value, the first communication control circuit 222 can adjust the transmission power of the wireless charging signal by decreasing the transmission frequency of the wireless charging signal and/or decreasing the input voltage of the wireless transmitting circuit 221.

The manner in which the second communication control circuit 235 sends the first feedback signal to the first communication control circuit 222 is not limited in implementations.

For example, the second communication control circuit 235 can send the first feedback signal to the first communication control circuit 222 periodically. Alternatively, the second communication control circuit 235 can send the first feedback signal to the first communication control circuit 222 only when the output current of the wireless receiving circuit does not satisfy the preset condition. If the output current of the wireless receiving circuit 231 satisfies the preset condition, the second communication control circuit 235 does not have to send the first feedback signal to the first communication control circuit 222.

The wireless-charging-signal receiving apparatus may further include a detecting circuit. The detecting circuit can be configured to detect charging information of the battery and send a second feedback signal to the first communication control circuit 222. The second feedback signal is a feedback signal corresponding to the charging information of the battery. The charging information of the battery may include at least one of: a charging voltage, a charging current, a present electric quantity, and a present voltage. The first communication control circuit 222 can adjust the transmission power of the wireless charging signal according to the second feedback signal.

The charging voltage and the charging current applied to the battery may also refer to an output voltage and an output current of the first charging channel.

As an example, a detecting circuit for detecting the output current of the wireless receiving circuit and a detecting circuit for detecting the charging information of the battery are implemented as one detecting circuit. As another example, the detecting circuit for detecting the output current of the wireless receiving circuit and the detecting circuit for detecting the charging information of the battery are implemented as different detecting circuits. The output current of the wireless receiving circuit and the charging information of the battery can be detected by two detecting circuits respectively.

As an example, for the device to-be-charged, during trickle charging, a voltage across the battery increases continuously, and accordingly, a charging power required by the battery increases. Therefore, it is necessary to increase the transmission power of the wireless charging signal to meet present charging requirements of the battery. During constant-voltage charging, the charging current applied to the battery decreases continuously, and accordingly, the charging power required by the battery decreases. Therefore, it is necessary to decrease the transmission power of the wireless charging signal to meet present charging requirements of the battery.

The first feedback signal can be used for triggering the first communication control circuit 222 to adjust the transmission power of the wireless charging signal, such that the transmission power of the wireless charging signal matches the charging voltage and/or the charging current currently required by the battery.

"The first communication control circuit 222 adjusts the transmission power of the wireless charging signal according to the second feedback signal" may mean that the first communication control circuit 222 adjusts the transmission power of the wireless charging signal, such that the transmission power of the wireless charging signal matches the charging voltage and/or the charging current currently required by the battery.

"The transmission power of the wireless transmitting circuit 221 matches the charging voltage and/or the charging current currently required by the battery 232" may mean that the transmission power of the wireless charging signal is configured by the first communication control circuit 222 such that the output voltage and/or the output current of the first charging channel 233 matches the charging voltage and/or the charging current currently required by the battery 232. In other words, the transmission power of the wireless charging signal is configured by the first communication control circuit 222 such that the output voltage and/or the output current of the first charging channel 233 meets charging requirements of the battery 232 (including requirements on charging voltage and/or charging current of the battery 232).

It should be understood that, "the output voltage and/or the output current of the first charging channel 233 matches the charging voltage and/or the charging current currently required by the battery 232" may refer to that a voltage value and/or a current value of a direct current (DC) outputted from the first charging channel 233 is equal to a charging voltage value and/or a charging current value required by the battery 232, or the difference therebetween is within a preset range (for example, the voltage value is 100mV (millivolt)∼200mV higher or lower than the charging voltage value, and the current value is 0.001A∼0.005A larger or smaller than the charging current value).

Charging of the battery includes at least one of a trickle charging stage, a constant-current charging stage, and a constant-voltage charging stage.

The second communication control circuit 235 performs wireless communication with the first communication control circuit 222 according to a voltage and/or a current at the first charging channel 233 detected by the detecting circuit, such that the first communication control circuit 222 adjusts the transmission power of the wireless transmitting circuit 221 according to the voltage and/or the current at the first charging channel 233 as follows: in the trickle charging stage of the battery 232, the second communication control circuit 235 performs wireless communication with the first communication control circuit 222 according to the voltage and/or the current detected at the first charging channel 233, such that the first communication control circuit 222 adjusts the transmission power of the wireless transmitting circuit 221 and as such, the output current of the first charging channel 233 matches a charging current corresponding to the trickle charging stage, that is, the output current of the first charging channel 233 meets requirements on charging current of the battery 232 in the trickle charging stage.

The content of the second feedback signal is not limited in implementations.

As an example, the second feedback signal includes the charging information of the battery. The first communication control circuit 222 can determine a present charging stage of the battery 232 according to the present electric quantity and/or the present voltage of the battery 232, to determine a target charging voltage and/or a target charging current that matches the charging voltage and/or the charging current currently required by the battery 232. Then the first communication control circuit 222 can compare the output voltage and/or the output current of the first charging channel 233 with the target charging voltage and/or the target charging current, to determine whether the output voltage and/or the output current of the first charging channel 233 matches the charging voltage and/or the charging current currently required by the battery 232. If the output voltage and/or the output current of the first charging channel 233 does not match the charging voltage and/or the charging current currently required by the battery 232, the first communication control circuit 222 adjusts the transmission power of the wireless transmitting circuit 221, until the output voltage and/or the output current of the first charging channel 233 matches the charging voltage and/or the charging current currently required by the battery 232.

As another example, the second communication control circuit 235 can send the adjustment information to the first communication control circuit 222, to instruct the first communication control circuit 222 to adjust the transmission power of the wireless transmitting circuit 221. For example, the second communication control circuit 235 can instruct the first communication control circuit 222 to increase the transmission power of the wireless transmitting circuit 221. For another example, the second communication control circuit 235 can instruct the first communication control circuit 222 to decrease the transmission power of the wireless transmitting circuit 221. The wireless-charging-signal transmitting apparatus 220 can set multiple grades for the transmission power of the wireless transmitting circuit 221. Each time the first communication control circuit 222 receives the adjustment information, the first communication control circuit 222 adjusts the transmission power of the wireless transmitting circuit 221 by one grade, until the output voltage and/or the output current of the first charging channel 233 matches the charging voltage and/or the charging current currently required by the battery 232.

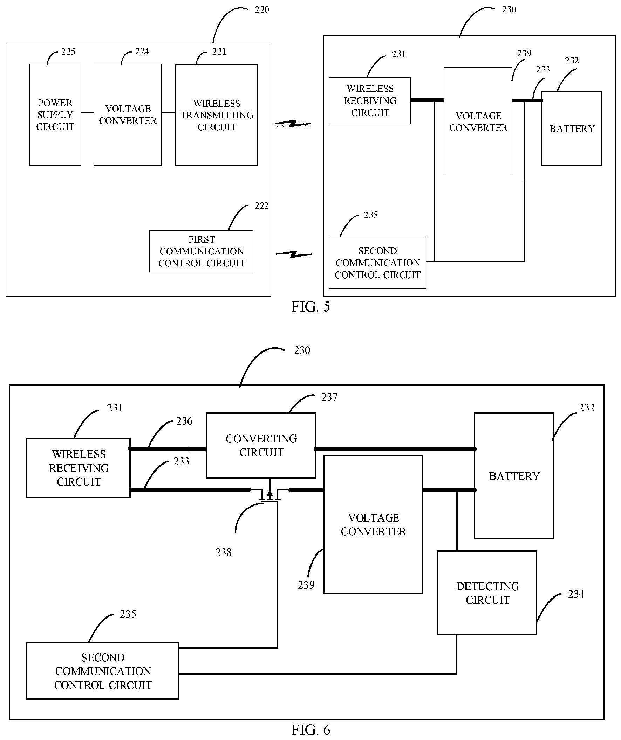

FIG. 5 illustrates another exemplary manner in which the transmission power of the wireless transmitting circuit 221 is adjusted. Instead of acquiring electrical energy from the power supply device 210, the wireless-charging-signal transmitting apparatus 220 illustrated in FIG. 5 directly converts an AC received from outside (such as mains electricity) into the wireless charging signal.

As illustrated in FIG. 5, the wireless-charging-signal transmitting apparatus 220 further includes a voltage converter 224 and a power supply circuit 225. The power supply circuit 225 can be configured to receive an AC from outside (such as mains electricity), and generate an output voltage and an output current of the power supply circuit 225 according to the AC. For example, the power supply circuit 225 can rectify and/or filter the AC to obtain a DC or a pulsating DC, and transmit the DC or the pulsating DC to the voltage converter 224.

The voltage converter 224 is configured to receive the output voltage of the power supply circuit 225 and convert the output voltage of the power supply circuit 225 to obtain an output voltage and an output current of the voltage converter 224. The wireless transmitting circuit 221 is further configured to generate the wireless charging signal according to the output voltage and the output current of the voltage converter 224.

According to implementations, a function similar to an adaptor is integrated into the wireless-charging-signal transmitting apparatus 220, such that there is no need for the wireless-charging-signal transmitting apparatus 220 to acquire power from an external power supply device, which improves the integration of the wireless-charging-signal transmitting apparatus 220 and decreases the number of components required for wireless charging.

According to implementations, energy transfer is achieved in the manner of high voltage and small current, and such a manner of energy transfer has high requirements on input voltage (such as 10V or 20V) of the wireless transmitting circuit 221. If a maximum output voltage of the power supply circuit 225 fails to meet requirements on input voltage of the wireless transmitting circuit 221, the voltage converter 224 can make the input voltage of the wireless transmitting circuit 221 reach an expected input voltage. Alternatively, if the output voltage of the power supply circuit 225 can meet requirements on input voltage of the wireless transmitting circuit 221, the voltage converter 224 can be omitted, to simplify the implementation of the wireless-charging-signal transmitting apparatus 220.

Different ranges of output current of the wireless receiving circuit can be set for difference charging stages. For example, for the trickle charging stage, a charging current required by the device to-be-charged is small, and therefore, small output current values can be set. For the constant-current charging stage, a charging current required by the device to-be-charged is large, and therefore, large output current values can be set.

According to implementations, the manner in which the wireless-charging-signal transmitting apparatus 220 adjusts the output power of the wireless transmitting circuit 221 may be various, which may include any one of the following three manners or any combination thereof.
(1) Under the same input voltage of the wireless transmitting circuit 221, the output power of the wireless transmitting circuit 221 can be adjusted by adjusting a tuning frequency of a resonant circuit and/or a duty cycle of a switch transistor of an inverting circuit.
(2) The output power of the wireless transmitting circuit 221 can be adjusted by adjusting the output voltage of the voltage converter 224 (that is, the input voltage of the wireless transmitting circuit 221).
(3) The output power of the wireless transmitting circuit 221 can be adjusted by adjusting an output voltage of the power supply device 210 (that is, an input voltage of the wireless-charging-signal transmitting apparatus).

In some implementations, the wireless-charging-signal transmitting apparatus 220 is operable in a first wireless charging mode and in a second wireless charging mode, and a speed at which the wireless-charging-signal transmitting apparatus 220 charges the device to-be-charged in the first wireless charging mode is higher than that in the second wireless charging mode. In other words, compared with the wireless-charging-signal transmitting apparatus 220 working in the second wireless charging mode, the wireless-charging-signal transmitting apparatus 220 working in the first wireless charging mode takes less time to fully charge a battery of the same capacity of the device to-be-charged.

The second wireless charging mode can be referred to as a normal wireless charging mode and can be, for example, a conventional wireless charging mode based on the QI standard, the PMA standard, or the A4WP standard. The first wireless charging mode can be referred to as a quick wireless charging mode. The normal wireless charging mode can refer to a wireless charging mode in which the wireless-charging-signal transmitting apparatus 220 has a low transmission power (usually lower than 15W, and the commonly used transmission power is 5W or 10W). In the normal wireless charging mode, it usually takes several hours to fully charge a battery of high capacity (such as 3000mA). However, in the quick wireless charging mode, the transmission power of the wireless-charging-signal transmitting apparatus 220 is relatively high (usually higher than or equal to 15W). Compared with the normal wireless charging mode, in the quick wireless charging mode, it takes substantially less charging time for the the wireless-charging-signal transmitting apparatus 220 to fully charge a battery of the same capacity, and the charging is faster.

As illustrated in FIG. 6, the wireless-charging-signal receiving apparatus 230 further includes a second charging channel 236. The second charging channel 236 may be a wire. The second charging channel 236 can be provided with a converting circuit 237. The converting circuit 237 is configured to perform voltage control on a DC outputted by the wireless receiving circuit 231, to obtain an output voltage and an output current of the second charging channel 236 to be applied to the battery 232 for charging.

The converting circuit 237 may be operable in a buck circuit and can provide electrical energy of constant current and/or constant voltage. In other words, the converting circuit 237 can be configured to perform constant-voltage control and/or constant-current control on charging of the battery.

When the battery 232 is charged through the second charging channel 236, the wireless transmitting circuit 221 can transmit an electromagnetic signal at a constant transmission power. After the wireless receiving circuit 231 receives the electromagnetic signal, the converting circuit 237 converts the electromagnetic signal into a voltage and a current which meet charging requirements of the battery 232, and such voltage and current subjected to conversion are applied to the battery 232 for charging. It should be understood that, the "constant transmission power" does not mean that the transmission power remains completely constant, and instead, the transmission power can vary within a certain range, for example, the transmission power is 0-0.5W higher or lower than 7.5W.

The detecting circuit 234 may be further configured to determine an error value by comparing a detected output voltage value of a rectifying circuit of the wireless receiving circuit with a preset target value (which may be, for example, a preset maximum output voltage value of the rectifying circuit), and transmit the error value to the wireless-charging-signal transmitting apparatus 220 as data package.

When the battery 232 is charged through the second charging channel 236, the wireless-charging-signal transmitting apparatus can wirelessly charge the device to-be-charged under the QI standard. In this way, a data signal carrying the above error value can be coupled, through signal modulation, to a coil of the wireless receiving circuit 231 to be transmitted to a coil of the wireless transmitting circuit 221 and then to the first communication control circuit. The first communication control circuit adjusts a transmission parameter of the wireless transmitting circuit 221 (such as a working frequency of the transmitting coil) according to the data package carrying the error value.

According to implementations, a charging mode in which the battery 232 is charged through the first charging channel 233 is referred to as the first wireless charging mode. A charging mode in which the battery 232 is charged through the second charging channel 236 is referred to as the second wireless charging mode. The wireless-charging-signal transmitting apparatus can perform handshake communication with the device to-be-charged to determine to use the first wireless charging mode or second wireless charging mode to charge the battery 232.

According to implementations, in the wireless charging apparatus, when the device to-be-charged is charged in the first wireless charging mode, a maximum transmission power of the wireless transmitting circuit 221 may be a first transmission power value. When the device to-be-charged is charged in the second wireless charging mode, the maximum transmission power of the wireless transmitting circuit 221 may be a second transmission power value, where the first transmission power value is greater than the second transmission power value. Therefore, a charging speed at which the device to-be-charged is charged in the first wireless charging mode is higher than that in the second wireless charging mode.

The second communication control circuit 235 can be further configured to control switching between the first charging channel 233 and the second charging channel 236. For example, as illustrated in FIG. 6, the first charging channel 233 may be provided with a switch 238. The second communication control circuit 235 can control switching between the first charging channel 233 and the second charging channel 236 by turning on/off the switch 238. As pointed above, the wireless-charging-signal transmitting apparatus 220 may be operable in the first wireless charging mode and the second wireless charging mode, and a speed at which the wireless-charging-signal transmitting apparatus 220 charges the device to-be-charged 230 in the first wireless charging mode is higher than that in the second wireless charging mode. When the wireless-charging-signal transmitting apparatus 220 charges the battery of the device to-be-charged 230 in the first wireless charging mode, the device to-be-charged 230 can control the first charging channel 233 to work. When the wireless-charging-signal transmitting apparatus 220 charges the battery of the device to-be-charged 230 in the second wireless charging mode, the device to-be-charged 230 can control the second charging channel 236 to work.

As described above, in order to reduce heating of a coil during wireless charging, if the first wireless charging mode is used, the charging manners illustrated in FIG. 1 to FIG. 3 can be adopted for wireless charging.

In the device to-be-charged, the second communication control circuit 235 can control switching between the first charging channel 233 and the second charging channel 236 according to the charging mode. When the first wireless charging mode is used, the second communication control circuit 235 controls the voltage converter 239 on the first charging channel 233 to work. When the second wireless charging mode is used, the second communication control circuit 235 controls the converting circuit 237 on the second charging channel 236 to work.

The wireless-charging-signal transmitting apparatus 220 can communicate with the wireless-charging-signal receiving apparatus 230 to negotiate the charging mode between the wireless-charging-signal transmitting apparatus 220 and the wireless-charging-signal receiving apparatus 230.

Besides the above communication content, the first communication control circuit 222 of the wireless-charging-signal transmitting apparatus 220 and the second communication control circuit 235 of the wireless-charging-signal receiving apparatus 230 can also exchange other types of communication information. The first communication control circuit 222 and the second communication control circuit 235 can exchange information for safety protection, abnormality detection, or fault handling, such as temperature information of the battery 232, information indicative of over-voltage protection or over-current protection, etc., or power-delivery efficiency information (indicative of efficiency in power delivery between the wireless transmitting circuit 221 and the wireless receiving circuit 231).

Communication between the second communication control circuit 235 and the first communication control circuit 222 may be one-way communication or two-way communication, which is not limited herein.

Functions of the second communication control circuit can be implemented by an application processor of the wireless-charging-signal receiving apparatus 230, which is possible to save hardware cost. Alternatively, functions of the second communication control circuit can be implemented by an independent control chip, which can make control more reliable.

The wireless receiving circuit 231 and the voltage converter 239 can be integrated into one wireless charging chip, which is possible to improve integration of the device to-be-charged and thereby simplify the structure of the device to-be-charged. For example, a function of a conventional wireless charging chip can be extended, such that the conventional wireless charging chip can support a charging management function.

The battery 232 of the wireless charging system of implementations may include one cell, or may include N cells coupled in series (N is a positive integer greater than one). As an example, N=2. The battery 232 may include a first cell and a second cell, and the first cell and the second cell are coupled in series. In an example, a charging power is 20W, and a charging voltage applied to a single cell is 5V In order to meet requirements on charging voltage of dual cells coupled in series, the output voltage/output current of the first charging channel 233 is required to be maintained at 10V/2A. In this way, the wireless transmitting circuit generates the electromagnetic signal based on 10V/2A, and accordingly, the wireless receiving circuit converts the electromagnetic signal into the output voltage/output current of 10V/2A. Since current is decreased to 2A from 4A, it is possible to reduce heating during electrical energy transmission. Therefore, multiple cells coupled in series can be adopted, to reduce heat generated by the wireless transmitting circuit 221 and the wireless receiving circuit 231.

In the above example, N=2. In practice, the value of N may be 3, or a positive integer greater than 3. A large number of cells coupled in series lead to low heat generated when electrical energy flows through the wireless transmitting circuit 221 and the wireless receiving circuit 231.

According to implementations, in order to ensure charging speed and further reduce heating of the wireless-charging-signal receiving apparatus 230, the structure of the battery of the wireless-charging-signal receiving apparatus 230 is modified by introducing multiple cells coupled in series. Compared with a single-cell scheme, in order to achieve an equal charging speed, a charging current required by multiple cells is 1/N time a charging current required by a single cell (N is the number of cells coupled in series in the wireless-charging-signal receiving apparatus 230). In other words, under the same charging speed, by adopting multiple cells coupled in series, it is possible to substantially decrease a charging current, thereby further decreasing the amount of heat generated by the wireless-charging-signal receiving apparatus 230 during charging.

The multiple cells of implementations can be cells with the same or similar specification or parameter. Cells with the same or similar specification can facilitate unified management. On the other hand, the overall performance and service life of multiple cells can be improved by adopting cells with the same or similar specification or parameter.

During charging, electrical energy outputted by the first charging channel or the second charging channel can be used for charging multiple cells coupled in series. During power supply, a voltage across the multiple cells can be decreased by a buck circuit to power a system of the wireless-charging-signal receiving apparatus 230. Alternatively, a single cell can be used to power the system. In addition, during charging, a path can be set separately to power the system if necessary.

To keep balance of an electric quantity of each of the multiple cells, a balancing circuit can be used for balancing the electric quantity of each of the multiple cells during charging and discharging. The balancing circuit can be implemented in various manners. For example, a load can be coupled between two ends of a cell to consume electric quantity of the cell, such that the electric quantity of the cell is equal to that of other cells and as such, the voltage of each of the multiple cells is equal. Alternatively, for balancing, a cell with high electric quantity can be made to charge a cell with low electric quantity until the voltage across each of the multiple cells is equal.

As described above, charging of the battery may include one or more of the trickle charging stage, the constant-current charging stage, and the constant-voltage charging stage. According to implementations, in order to further increase charging speed, through control of a charging voltage and a charging current, charging duration of the constant-voltage charging stage can be shortened or the constant-voltage charging stage can be omitted. Therefore, compared with the related art, it is possible to substantially increase charging speed.

As an example, a threshold voltage Vn, which is higher than a cut-off voltage of the battery, and multiple charging currents [I1, I2, I3, ..., In] can be set, where n≥1 and I1≥I2≥I3... It should be understood that, the threshold voltage Vn is related to the system of the battery, the material of the battery, and the like. For example, if the cut-off voltage of the battery is V0, Vn can be set to be V0+ΔV, where ΔV may be, for example, 0.05V∼0.1V. Charging currents I1, I2, ..., In are also related to the system of the battery, the material of the battery, and the like. In may be, for example, 700mA (milliampere).

The capacity of the battery can be determined once the system of the battery is determined. If the charging voltage is equal to the threshold voltage Vn, charging currents corresponding to different stages can be determined according to a relationship between charging voltage, charging current, charging time, and capacity of the battery. A difference between each two adjacent charging currents of I1, I2, I3, ..., In can be set to be ΔI, where ΔI may be, for example, 100mA∼1A.

As an example, no matter whether charging is performed through the first charging channel or the second charging channel, when the battery is charged until a voltage across the battery reaches the cut-off voltage, charging current I1 is applied to the battery for constant-current charging until the voltage across the battery reaches the threshold voltage Vn. Since the voltage across the battery will drop when stopping applying charging current I1 to the battery for constant-current charging, charging current I2 can be then applied to the battery for constant-current charging until the voltage across the battery reaches the threshold voltage Vn. The above steps are repeated, until charging current In corresponding to a final charging stage is applied for charging until the voltage across the battery reaches the threshold voltage Vn, and then charging ends. In this way, by setting the threshold voltage Vn and charging current corresponding to each stage, it is possible to omit the constant-voltage charging stage in the related art, thereby substantially saving charging time.

In other words, when the battery is charged until the voltage across the battery reaches the cut-off voltage, the battery is then charged though multiple charging stages, where each of the multiple charging stages corresponds to one charging current, and for two adjacent charging stages, a charging current corresponding to a former charging stage is larger than that corresponding to a latter charging stage. In each of the multiple charging stages, a charging current corresponding to the charging stage is applied to the battery for charging until the voltage across the battery reaches the threshold voltage, where the threshold voltage is higher than the cut-off voltage of the battery. When the multiple charging stages are completed, charging ends.

As another example, whether charging is performed though the first charging channel or the second charging channel, when the battery is charged until the voltage across the battery reaches the cut-off voltage, charging current I1 is applied to the battery for constant-current charging until the voltage across the battery reaches the threshold voltage Vn. Then charging current 12 is applied to the battery for constant-current charging until the voltage across the battery reaches the threshold voltage Vn. The above steps are repeated, until charging current In corresponding to a final charging stage is applied for charging until the voltage across the battery reaches the threshold voltage Vn. Then Vn is taken as a charging voltage to be applied for constant-voltage charging for a preset duration or until the charging current decreases to a preset value (such as 100mA), and then charging ends. By means of the above example, a charging cut-off voltage can be increased and duration of constant-voltage charging can be shortened. Therefore, compared with the related art, by adopting the above manner, it is possible to substantially save charging time.

In other words, when the battery is charged until the voltage across the battery reaches the cut-off voltage, the battery is then charged though multiple charging stages, where each of the multiple charging stages corresponds to one charging current, and for two adjacent charging stages, a charging current corresponding to a former charging stage is larger than that corresponding to a latter charging stage. In each of the multiple charging stages, a charging current corresponding to the charging stage is applied to the battery for charging until the voltage across the battery reaches the threshold voltage, where the threshold voltage is higher than the cut-off voltage of the battery. Then the threshold voltage is applied to the battery for constant-voltage charging, until the charging current of the battery reaches a target cut-off current of constant-voltage charging or charging duration reaches a preset duration, and then charging ends.

When the battery includes multiple cells, it is necessary to detect whether a voltage across each of the multiple cells reaches the cut-off voltage or the threshold voltage. When a voltage across any one of the multiple cells reaches the cut-off voltage or the threshold voltage, charging current switching is performed (that is, switching to a charging current corresponding to a latter charging stage from a charging current corresponding to a former charging stage). Alternatively, a charging path of a cell that is fully charged can be cut off, and other cells of the battery can continue to be charged. In other words, charging can be performed separately on each of the multiple cells through the above charging process.

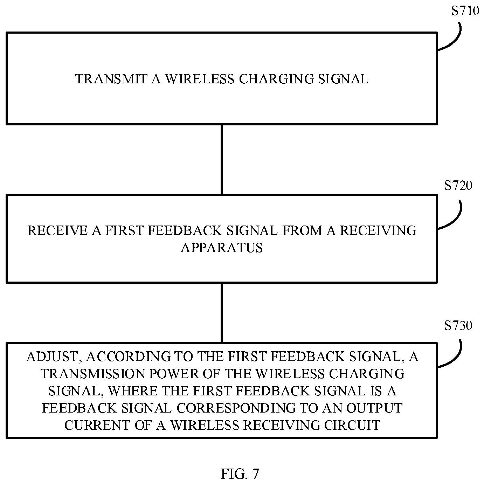

Device/apparatus implementations have been elaborated with reference to FIGS. 2 to 6 above. Hereinafter, method implementations will be elaborated with reference to FIG. 7. Method implementations and device/apparatus implementations correspond to each other. Therefore, for details not described in method implementations, reference can be made to the foregoing device/apparatus implementations.

FIG. 7 is a schematic flowchart of a wireless charging method according to implementations. The method is applicable to a wireless-charging-signal transmitting apparatus, such as the wireless-charging-signal transmitting apparatus 220 described above. As illustrated in FIG. 7, the method includes operations at blocks S710∼S730.

At block S710, a wireless charging signal is transmitted.

At block S720, a first feedback signal is received from a receiving apparatus.

At block S730, a transmission power of the wireless charging signal is adjusted according to the first feedback signal, where the first feedback signal is a feedback signal corresponding to an output current of a wireless receiving circuit.

In some implementations, operations at block S730 include the following. A transmission frequency of the wireless charging signal is adjusted according to the first feedback signal.

In other implementations, operations at block S730 include the following. An input voltage and/or an input current of a wireless transmitting circuit is adjusted according to the first feedback signal.

In some implementations, the method illustrated in FIG. 7 further includes the following. An output voltage and/or an output current of a power supply device is adjusted to obtain an output voltage of a voltage converter. The transmission power of the wireless charging signal is adjusted according to the first feedback signal as follows. The output voltage of the voltage converter is adjusted according to the first feedback signal.

In some implementations, the first feedback signal includes adjustment information, and the adjustment information is used to instruct to adjust a voltage and/or a current corresponding to the transmission power of the wireless charging signal.

In some implementations, the method illustrated in FIG. 7 further includes the following. A second feedback signal is received from the receiving apparatus, and the transmission power of the wireless charging signal is adjusted according to the second feedback signal, where the second feedback signal is a feedback signal corresponding to charging information of a battery, and the charging information of the battery includes at least one of: a charging voltage, a charging current, a present electric quantity, and a present voltage.

In some implementations, the transmission power of the wireless charging signal is adjusted according to the second feedback signal as follows. The transmission frequency of the wireless charging signal is adjusted according to the second feedback signal.

In other implementations, the transmission power of the wireless charging signal is adjusted according to the second feedback signal as follows. The input voltage and/or the input current of the wireless transmitting circuit is adjusted according to the second feedback signal.

In some implementations, the method illustrated in FIG. 7 further includes the following. An output voltage and/or an output current of a power supply device is adjusted to obtain an output voltage of a voltage converter. The transmission power of the wireless charging signal is adjusted according to the second feedback signal as follows. The output voltage of the voltage converter is adjusted according to the second feedback signal.

In some implementations, the second feedback signal includes adjustment information, and the adjustment information is used to instruct to adjust the transmission power of the wireless charging signal.

In some implementations, the method is applicable to a transmitting apparatus. The transmitting apparatus is operable in a first wireless charging mode and a second wireless charging mode, where a speed at which the transmitting apparatus charges the receiving apparatus in the first wireless charging mode is higher than that in the second wireless charging mode.

In some implementations, the method further includes the following. Communicate with the receiving apparatus to negotiate to use the first wireless charging mode or the second wireless charging mode for wireless charging.

In some implementations, the method further includes the following. Perform handshake communication with the receiving apparatus. When handshake communication succeeds, the transmitting apparatus is controlled to charge the receiving apparatus in the first wireless charging mode.

In other implementations, the method further includes the following. Perform handshake communication with the receiving apparatus. When handshake communication fails, the transmitting apparatus is controlled to charge the receiving apparatus in the second wireless charging mode.

In some examples, the first feedback signal and the second feedback signal can be transmitted in at least one of the following manners: Bluetooth®, Wi-Fi, backscatter modulation, high-carrier-frequency based short-distance wireless communication, optical communication, ultrasonic communication, ultra-wideband communication, mobile communication, and a data interface.

As an example, a high carrier frequency may be 60GHz.

As an example, the optical communication may be performed with infrared rays.

As an example, the mobile communication may be performed based on at least one of the following communication protocols: 5G communication protocols, 4G communication protocols, and 3G communication protocols.

All or part of the above implementations can be implemented through software, hardware, firmware, or any other combination thereof. When implemented by software, all or part of the above implementations can be implemented in the form of a computer program product. The computer program product includes one or more computer instructions. When the computer instructions are applied and executed on a computer, all or part of the operations or functions of implementations are performed. The computer can be a general-purpose computer, a special-purpose computer, a computer network, or other programmable apparatuses. The computer instruction can be stored in a computer readable storage medium, or transmitted from one computer readable storage medium to another computer readable storage medium. For example, the computer instruction can be transmitted from one website, computer, server, or data center to another website, computer, server, or data center in a wired manner or in a wireless manner. Examples of the wired manner can be a coaxial cable, an optical fiber, a DSL, etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Those of ordinary skill in the art will appreciate that units and algorithmic operations of various examples described in connection with implementations herein can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be appreciated that the systems, apparatuses, and methods disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of implementations.

Various functional units described in implementations herein may be integrated into one processing unit or may be present as a number of physically separated units, and two or more units may be integrated into one.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A transmitting apparatus, comprising:
a wireless transmitting circuit configured to transmit a wireless charging signal; and
a communication control circuit configured to receive a first feedback signal from a receiving apparatus and adjust, according to the first feedback signal, at least one of a voltage and a current corresponding to a transmission power of the wireless charging signal, wherein the first feedback signal is a feedback signal corresponding to an output current of a wireless receiving circuit.

2. The transmitting apparatus of claim 1, wherein the communication control circuit configured to adjust, according to the first feedback signal, the at least one of the voltage and the current corresponding to the transmission power of the wireless charging signal is configured to:
adjust a transmission frequency of the wireless charging signal according to the first feedback signal.

3. The transmitting apparatus of claim 1, wherein the communication control circuit configured to adjust, according to the first feedback signal, the at least one of the voltage and the current corresponding to the transmission power of the wireless charging signal is configured to:
adjust at least one of an input voltage and an input current of the wireless transmitting circuit according to the first feedback signal.

4. The transmitting apparatus of claim 3, further comprising:
a voltage converter having an input end electrically coupled with an output end of a power supply device and an output end electrically coupled with an input end of the wireless transmitting circuit, and configured to adjust at least one of an output voltage and an output current of the power supply device to obtain an output voltage of the voltage converter, wherein
the communication control circuit configured to adjust the at least one of the input voltage and the input current of the wireless transmitting circuit according to the first feedback signal is configured to:
adjust the output voltage of the voltage converter according to the first feedback signal.

5. The transmitting apparatus of any of claims 1 to 4, wherein the first feedback signal comprises adjustment information, and the adjustment information is used to instruct the transmitting apparatus to adjust the at least one of the voltage and the current corresponding to the transmission power of the wireless charging signal.

6. The transmitting apparatus of any of claims 1 to 5, wherein the communication control circuit is further configured to:
receive a second feedback signal from the receiving apparatus, and adjust the transmission power of the wireless charging signal according to the second feedback signal, wherein
the second feedback signal is a feedback signal corresponding to charging information of a battery, and the charging information of the battery comprises at least one of: a charging voltage, a charging current, a present electric quantity, and a present voltage.

7. The transmitting apparatus of claim 6, wherein the communication control circuit configured to adjust the transmission power of the wireless charging signal according to the second feedback signal is configured to:
adjust the transmission frequency of the wireless charging signal according to the second feedback signal.

8. The transmitting apparatus of claim 6, wherein the communication control circuit configured to adjust the transmission power of the wireless charging signal according to the second feedback signal is configured to:
adjust the at least one of the input voltage and the input current of the wireless transmitting circuit according to the second feedback signal.

9. The transmitting apparatus of claim 8, further comprising:
a voltage converter having an input end electrically coupled with an output end of a power supply device and an output end electrically coupled with an input end of the wireless transmitting circuit, and configured to adjust at least one of an output voltage and an output current of the power supply device to obtain an output voltage of the voltage converter, wherein
the communication control circuit configured to adjust the at least one of the input voltage and the input current of the wireless transmitting circuit according to the second feedback signal is configured to:
adjust the output voltage of the voltage converter according to the second feedback signal.

10. The transmitting apparatus of any of claims 6 to 9, wherein the second feedback signal comprises adjustment information, and the adjustment information is used to instruct the transmitting apparatus to adjust the transmission power of the wireless charging signal.

11. The transmitting apparatus of any of claims 1 to 10, wherein the transmitting apparatus is operable in a first wireless charging mode and a second wireless charging mode, and a speed at which the transmitting apparatus charges the receiving apparatus in the first wireless charging mode is higher than that in the second wireless charging mode.

12. The transmitting apparatus of claim 11, wherein the communication control circuit is further configured to:
communicate with the receiving apparatus to negotiate to use the first wireless charging mode or the second wireless charging mode for wireless charging.

13. The transmitting apparatus of claim 11 or 12, wherein the communication control circuit is configured to:
perform handshake communication with the receiving apparatus, and control the transmitting apparatus to charge the receiving apparatus in the first wireless charging mode when handshake communication succeeds.

14. The transmitting apparatus of claim 11 or 12, wherein the communication control circuit is configured to:
perform handshake communication with the receiving apparatus, and control the transmitting apparatus to charge the receiving apparatus in the second wireless charging mode when handshake communication fails.

15. A wireless charging method, comprising:
transmitting a wireless charging signal;
receiving a first feedback signal from a receiving apparatus; and
adjusting, according to the first feedback signal, at least one of a voltage and a current corresponding to a transmission power of the wireless charging signal, wherein the first feedback signal is a feedback signal corresponding to an output current of a wireless receiving circuit.

16. The method of claim 15, wherein adjusting, according to the first feedback signal, the at least one of the voltage and the current corresponding to the transmission power of the wireless charging signal comprises:
adjusting a transmission frequency of the wireless charging signal according to the first feedback signal.

17. The method of claim 15, wherein adjusting, according to the first feedback signal, the at least one of the voltage and the current corresponding to the transmission power of the wireless charging signal comprises:
adjusting at least one of an input voltage and an input current of a wireless transmitting circuit according to the first feedback signal.

18. The method of claim 17, further comprising:
adjusting at least one of an output voltage and an output current of a power supply device to obtain an output voltage of a voltage converter, wherein the voltage converter has an input end electrically coupled with an output end of the power supply device and an output end electrically coupled with an input end of the wireless transmitting circuit, wherein
adjusting the at least one of the input voltage and the input current of the wireless transmitting circuit according to the first feedback signal comprises:
adjusting the output voltage of the voltage converter according to the first feedback signal.

19. The method of any of claims 15 to 18, wherein the first feedback signal comprises adjustment information, and the adjustment information is used to instruct to adjust the at least one of the voltage and the current corresponding to the transmission power of the wireless charging signal.

20. The method of any of claims 15 to 19, further comprising:
receiving a second feedback signal from the receiving apparatus, and adjusting the transmission power of the wireless charging signal according to the second feedback signal, wherein
the second feedback signal is a feedback signal corresponding to charging information of a battery, and the charging information of the battery comprises at least one of: a charging voltage, a charging current, a present electric quantity, and a present voltage.

21. The method of claim 20, wherein adjusting the transmission power of the wireless charging signal according to the second feedback signal comprises:
adjusting the transmission frequency of the wireless charging signal according to the second feedback signal.

22. The method of claim 20, wherein adjusting the transmission power of the wireless charging signal according to the second feedback signal comprises:
adjusting the at least one of the input voltage and the input current of the wireless transmitting circuit according to the second feedback signal.

23. The method of claim 22, further comprising:
adjusting at least one of an output voltage and an output current of a power supply device to obtain an output voltage of a voltage converter, wherein the voltage converter has an input end electrically coupled with an output end of the power supply device and an output end electrically coupled with an input end of the wireless transmitting circuit, wherein
adjusting the at least one of the input voltage and the input current of the wireless transmitting circuit according to the second feedback signal comprises:
adjusting the output voltage of the voltage converter according to the second feedback signal.

24. The method of any of claims 20 to 23, wherein the second feedback signal comprises adjustment information, and the adjustment information is used to instruct to adjust the transmission power of the wireless charging signal.

25. The method of any of claims 15 to 24, wherein the method is applicable to a transmitting apparatus, the transmitting apparatus is operable in a first wireless charging mode and a second wireless charging mode, and a speed at which the transmitting apparatus charges the receiving apparatus in the first wireless charging mode is higher than that in the second wireless charging mode.

26. The method of claim 25, further comprising:
communicating with the receiving apparatus to negotiate to use the first wireless charging mode or the second wireless charging mode for wireless charging.

27. The method of claim 25 or 26, further comprising:
performing handshake communication with the receiving apparatus; and
controlling the transmitting apparatus to charge the receiving apparatus in the first wireless charging mode when handshake communication succeeds.

28. The method of claim 25 or 26, further comprising:
performing handshake communication with the receiving apparatus; and
controlling the transmitting apparatus to charge the receiving apparatus in the second wireless charging mode when handshake communication fails.
